# EUROPÄISCHE PATENTANMELDUNG

(11) **EP 4 020 675 A1**
(43) Veröffentlichungstag der Anmeldung: **29.06.2022**
(21) Anmeldenummer: 21208556.7
(22) Anmeldetag: 16.11.2021
(51) Int. Cl.: H01M 50/105, H01M 50/317, B65D 77/22

(54) **POUCHZELLE**

(30) Priorität: 22.12.2020 DE 102020216452
(71) Anmelder: Volkswagen AG, 38440 Wolfsburg (DE)
(72) Erfinder: EBBIGHAUSEN, Marius, 31718 Pollhagen (DE); KUNZE, Miriam, 30926 Seelze (DE)
(74) Vertreter: FDST Patentanwälte

(57) **Zusammenfassung**

Die Erfindung betrifft eine Pochzelle (2) aufweisend einen Pouchbeutel (4), wobei ein den Pouchbeutel (4) durchsetzender Entgasungskanal (10) vorgesehen ist, welcher einen Beutelinnenraum mit einer Umgebung verbindet, wobei ein Verschließelement (12) in dem Entgasungskanal (10) einsitzt, und wobei das Verschließelement (12) derart ausgelegt ist, dass wenn ein Überdruck in dem Beutelinnenraum auftritt, das Verschließelement (12) durch den Überdruck aus dem Entgasungskanal (10) heraus gedrückt wird, und dabei den Entgasungskanal (10) freigibt.

## Beschreibung

Die Erfindung betrifft eine Pouchzelle sowie eine Fahrzeugbatterie mit einer solchen Pouchzelle.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt. Zur Erzeugung oder Bereitstellung einer ausreichend hohen Betriebsspannung weisen solche Fahrzeugbatterien typischerweise mindestens ein Batteriezellmodul auf, bei welchem mehrere einzelne Batteriezellen modular verschaltet sind.

Die Batteriezellen sind beispielsweise als elektrochemische (Dünn-)Schichtzellen ausgeführt. Die Dünnschichtzellen weisen einen geschichteten Aufbau mit einer Kathodenschicht (Kathode) und mit einer Anodenschicht (Anode) sowie mit einer dazwischen eingebrachten Separatorschicht (Separator) auf. Diese Bestandteile werden beispielsweise von einem flüssigen Elektrolyten (Flüssigelektrolyt) durchdrungen, welcher eine ionenleitfähige Verbindung der Bestandteile beziehungsweise einen Ladungsausgleich erzeugt. In der Regel sind hierbei mehrere Schichtzellen als ein Zellenstapel übereinandergestapelt angeordnet.

Zur Herstellung von Batteriezellen wird beispielsweise eine Aktivmaterial- oder Elektrodenmaterialschicht, auf einen Stromableiter (Ableiterfähnchen) aufgetragen. Die Ableiterfähnchen sind hierbei häufig als Metallfolien ausgeführt, wobei typischerweise Kupferfolien für die Anodenschichten und Aluminiumfolien für die Kathodenschichten eingesetzt werden. Derart beschichtete Stromableiter oder Ableiterfähnchen werden als gestapelte Elektroden (Elektrodenstapel) verwendet. Die Ableiterfähnchen des Elektroden- oder Zellenstapels werden miteinander zu einer gemeinsamen Anode und einer gemeinsamen Kathode, welche nachfolgend auch als Stromsammler oder Kollektoren bezeichnet werden, elektrisch kontaktiert.

Um den Zellenstapel (Elektrodenstapel) gegen ein Eindringen von Feuchtigkeit und/oder Schmutz zu schützen, sowie andererseits ein Austreten von Chemikalien beziehungsweise des Flüssigelektrolyten im Falle einer Beschädigung der Batteriezelle zu verhindern, ist in der Regel ein Zellengehäuse als Einhausung oder Ummantelung vorgesehen. Das Zellengehäuse ist beispielsweise als eine Aluminium-Verbundfolie oder als eine Aluminium-Laminatfolie ausgeführt, wobei derartige flexible oder folienartige Zellengehäuse auch als Pouchbeutel oder Pouchfolien-Mantel und Batteriezellen mit einem solchen Zellengehäuse auch als Pouchzellen oder Softpack-Zellen bezeichnet sind.

Derartige Pouchbeutel sind beispielsweise aus einem einzelnen gefalteten Beutelblatt oder aus zwei gefügten Beutelhälften hergestellt. Das Beutelblatt oder die Beutelhälften sind hierbei in der Regel als tiefgezogene Pouchfolien ausgeführt, welche beispielsweise mittels eines Heißsiegelverfahrens umlaufend zu einem dichten Pouchbeutel stoffschlüssig gefügt werden.

Während des Betriebs von Lithium-Ionen-Zellen treten Zersetzungsreaktionen innerhalb der Batterie- oder Pouchzelle auf, welche ausgasen, also ein gasförmiges Reaktions- oder Entstehungsprodukt erzeugen. Diese Gasentstehung oder Gasentwicklung tritt vermehrt während eines Ladevorgangs auf. Die entstehenden Gase sammeln sich im Inneren der Pouchzelle an und bewirken eine Volumenzunahme oder Volumenexpansion der Pouchzelle beziehungsweise des Pouchbeutels und/oder weitere ungewünschte Nebenreaktionen.

Die gasbedingte Volumenzunahme der Pouchzelle kann insbesondere aufgrund von Alterungsgasen oder bei einem thermischen Durchgehen (thermal runaway) zu Beschädigungen (Risse) oder vollständigen Zerstörung der Batterie beziehungsweise des Pouchbeutels führen. Hierbei kann die Pouchzelle unkontrolliert entlang der umlaufenden Siegelnähte, also an einer nicht vorhersehbaren Position, öffnen und ungerichtet oder unkontrolliert in den Bauraum des Batteriemoduls oder Batteriesystems entgasen. Ein solches unkontrolliertes Entgasen der Pouchzelle in alle Raumrichtungen kann zur Beschädigung oder vollständigen Zerstörung von Komponenten in der Bauraumumgebung führen. Dies ist insbesondere hinsichtlich Komponenten, welche wichtige oder sicherheitsrelevante Funktionen erfüllen, als kritisch zu bewerten. Diese Komponenten müssen daher durch weitere Packagemaßnahmen vor einer Beschädigung geschützt werden. Diese Maßnahmen verursachen zusätzliche Kosten und weisen einen Bauraumbedarf auf, welcher in der Folge die Energiedichte des Batteriesystems vermindert.

Hierbei ist es beispielsweise möglich, den in der Pouchzelle vorhandenen Bauraum hinsichtlich einer solchen Volumenvergrößerten Batteriezelle auszulegen, wodurch jedoch der Bauraumbedarf der Pouchzelle erhöht und deren Energiedichte reduziert wird. Zusätzlich oder alternativ ist es beispielsweise ebenfalls möglich, ein zusätzliches Überdruckventil am Pouchbeutel vorzusehen, welches ein (Auf-)Platzen des Pouchbeutels verhindern soll.

In der DE 10 2013 219 223 A1 ist ein Entgasungs- oder Überdruckventil für eine Batteriezelle offenbart. Das Entgasungsventil weist eine gasdurchlässige Membran auf, welche als eine poröse Festkörpermembran ausgestaltet ist. Die Membran ist beispielsweise mit einem Werkstoff oder einer Folie abgedeckt, welche(r) bei einer kritischen Temperatur der Batteriezelle schmilzt und/oder sich bei einem kritischen Druck von den Poren löst.

Der Erfindung liegt die Aufgabe zugrunde, eine besonders geeignete Pouchzelle anzugeben. Insbesondere soll eine kontrollierte Öffnung des Pouchbeutels bei einem unzulässigen Innendruck ermöglicht werden. Die Erfindung betrifft weiterhin eine Fahrzeugbatterie mit einer solchen Pouchzelle.

Hinsichtlich der Pouchzelle wird die Aufgabe mit den Merkmalen des Anspruchs 1 und hinsichtlich der Fahrzeugbatterie mit den Merkmalen des Anspruchs 10 erfindungsgemäß gelöst. Vorteilhafte Ausgestaltungen und Weiterbildungen sind Gegenstand der Unteransprüche. Die im Hinblick auf die Pouchzelle angeführten Vorteile und Ausgestaltungen sind sinngemäß auch auf die Fahrzeugbatterie übertragbar und umgekehrt.

Die erfindungsgemäße Pouchzelle ist als eine Batteriezelle im Pouch- oder Softbagformat ausgeführt, und weist einen insbesondere fluiddichten Pouchbeutel als Zellgehäuse auf, welcher an von einem Entgasungskanal beispielsweise senkrecht durchsetzt ist. Mit anderen Worten ist ein Entgasungskanal in den Pouchbeutel integriert. Der Entgasungskanal verbindet hierbei einen Beutelinnenraum mit einer Umgebung. Der Beutelinnenraum ist das (der) durch den Pouchbeutel eingefasste Volumen oder Bauraum, wobei die Umgebung der die Pouchzelle umgebende Raum ist.

Der beispielsweise rohrförmige oder hohlzylindrische Entgasungskanal ist also als eine Durchführöffnung des Pouchbeutels ausgeführt. In den Entgasungskanal ist ein diesen verschließendes Verschließelement eingesetzt. Das Verschließelement ist erfindungsgemäß derart ausgelegt, dass wenn ein Überdruck in dem Beutelinnenraum auftritt, das Verschließelement durch den Überdruck aus dem Entgasungskanal herausgedrückt wird, und dabei den Entgasungskanal freigibt oder öffnet. Im freigegebenen oder geöffneten Zustand ist eine strömungs- und drucktechnische Verbindung zwischen dem Beutelinnenraum und der Umgebung realisiert. Der Entgasungskanal kann hierbei individuell an jeder Seite des Pouchbeutels angeordnet werden.

Der Entgasungskanal und das Verschließelement wirken somit nach Art eines Überdruckventils (Sicherheitsventil) oder einer Berstscheibe, um einen kritischen Überdruck aus dem Beutelinneren zu reduzieren, und somit eine Beschädigung oder Zerstörung des Pouchbeutels zu vermeiden. Dadurch ist eine besonders geeignete Pouchzelle realisiert. Insbesondere wird die Pouchzelle im Fehlerfall (Überdruck) automatisch oder selbsttätig an einer definierten Stelle oder Position lokal geöffnet. Somit ist eine lokale, kontrollierte und gerichtete Entgasung ermöglicht, wodurch die Sicherheit der Pouchzelle verbessert wird. Insbesondere ist es somit möglich, ein unkontrolliertes Aufplatzen des Pouchbeutels zu verhindern. Dadurch kann sichergestellt werden, dass benachbarte Pouchzellen in einem Batteriemodul oder einem Batteriepack weniger oder kein Gas, oder Deformation der fehlerhaften Pouchzelle abbekommen. Somit wird die Sicherheit bei einer Anwendung in einem Batteriemodul oder einem Batteriepack verbessert.

In einer vorteilhaften Ausführung ist der der Pouchbeutel mittels einer Fügeverbindung fluiddicht abgedichtet, wobei der Entgasungskanal den Pouchbeutel im Bereich der Fügeverbindung durchsetzt. Dadurch ist eine besonders zweckmäßige Anordnung oder Positionierung des Entgasungskanals realisiert. Dies bedeutet, dass der Entgasungskanal vorzugsweise individuell an jeder Seite des Pouchbeutels mit einer Fügeverbindung angeordnet werden kann.

Der Pouchbeutel ist beispielsweise aus zwei umlaufend gefügten Beutelhälften gebildet. Die Beutelhälften sind hierbei als tiefgezogene Pouchfolien ausgeführt. Die Pouchfolie ist beispielsweise als eine Aluminium-Verbundfolie oder als eine Aluminium-Laminatfolie ausgeführt, und weist beispielsweise einen Polypropylen- (PP) und/oder Polyester-Anteil (PET) auf. Die insbesondere tiefgezogenen Beutelhälften werden hierbei umlaufend stoffschlüssig zu dem Pouchbeutel gefügt. Die Beutelhälften werden beispielsweise mit einem definierten Druck und mit einer definierten (Siegel-)Zeit sowie einer definierten (Siegel-)Temperatur in einem Heißsiegelverfahren gefügt, so dass eine umlaufende, randseitige, Schweiß- oder Siegelnaht als Fügeverbindung erzeugt wird.

Der Pouchbeutel kann alternativ auch als ein einzelnes Beutelblatt oder (Pouch-)Folienblatt ausgeführt sein, welches mittels Biegungen in eine Beutelform gefaltet wird. Beispielsweise wird bei einem sogenannten Bottomfolding oder Bookfolding das Beutelblatt in der Mitte (horizontal) zusammen geklappt, wobei eine umlaufende dreiseitige Versiegelung oder Fügeverbindung an den geöffneten Beutelseiten erfolgt.

In dem Pouchbeutel der Pouchzelle ist vorzugsweise ein Elektrodenstapel (Zellstapel) aufgenommen. Der Elektrodenstapel weist beispielsweise eine Anzahl von übereinander gestapelt angeordneten Dünnschichtzellen mit einer Kathodenschicht und mit einer Anodenschicht sowie mit einer dazwischen eingebrachten Separatorschicht (Separator) auf. In dem Pouchbeutel ist beispielsweise ein Flüssigelektrolyt aufgenommen, welcher den Elektrodenstapel durchsetzt. Bezogen auf eine Einbausituation in einem Batteriemodul einer Fahrzeugbatterie ist der Entgasungskanal vorzugsweise an einer Seite des Pouchbeutels angeordnet, welche nicht einem Untergrund oder einem Boden der Fahrzeugbatterie zugewandt ist. Dies bedeutet, dass der Entgasungskanal in der Einbausituation nach oben oder horizontal angeordnet ist, so dass der Flüssigelektrolyt bei einem Öffnen des Entgasungskanals nicht ausläuft.

In einer zweckmäßigen Ausgestaltung ist der Entgasungskanal durch das Verschließelement fluiddicht und druckdicht verschlossen. Dadurch wird sichergestellt, dass der Pouchbeutel zuverlässig verschlossen ist. Somit wird der Elektrodenstapel zuverlässig vor äußeren Einflüssen geschützt, und ein ungewünschtes Austreten des Flüssigelektrolyten wird verhindert. Das Verschließelement ist hierbei vorzugsweise chemisch inert gegenüber dem Flüssigelektrolyt.

In einer geeigneten Ausbildung ist das Verschließelement als eine plastische Masse in den Entgasungskanal eingebracht. Bei der plastischen Masse handelt es sich insbesondere um eine elastische Dicht- oder Klebemasse. Die Plastizität oder (Ver-)Formbarkeit des Verschließelements gewährleistet, dass das Volumen des Entgasungskanals möglichst vollständig ausgefüllt wird, so dass der Pouchbeutel zuverlässig fluid- und druckdicht mittels des Verschließelements verschlossen ist.

Die plastische Masse kann beispielsweise nach dem Einbringen in den Entgasungskanal ausgehärtet oder verfestigt werden, so dass das Verschließelement im Wesentlichen als ein Stopfen ausgeführt ist. Beispielsweise ist die Masse als ein Zwei-Komponenten-Epoxid ausgebildet, welches nach dem Einbringen in den Entgasungskanal erhärtet. Ebenso denkbar ist, dass das Verschließelement, also die plastische Masse nach dem Einbringen nicht ausgehärtet wird. Mit anderen Worten kann die plastische Masse als eine dauerplastische Masse ausgeführt sein. Beispielsweise ist das Verschließelement hierbei aus einem Butylkautschuk oder einer Klebeknete hergestellt.

Ein zusätzlicher oder weiterer Effekt sieht vor, dass der Entgasungskanal im Zuge eines Evakuierungsprozesses des Beutelinnenraums offen ist, und nach dem Evakuierungsprozess fluid- und druckdicht mit dem Verschließelement verschlossen ist. Der Entgasungskanal ist somit derart in den Pouchbeutel beziehungsweise in die Fügeverbindung eingebracht, dass die Pouchzelle nach einer Formierung vakuumiert werden kann. Anschließend wird der Entgasungskanal mit dem Verschließelement verschlossen. Dadurch ist eine vorteilhafte Funktionsintegration realisiert, bei welcher die für die Evakuierung genutzte Beutelöffnung (Entgasungskanal) als Überdruckschutz weiterverwendet wird. Mit anderen Worten wird als Entgasungskanal das für die Evakuierung des Pouchbeutels in diesem eingebrachten Element verwendet.

In einer bevorzugten Ausführung ist der Entgasungskanal als eine Kanüle ausgeführt. Unter einer Kanüle ist hierbei insbesondere ein Röhrchen zu verstehen, welches in den Pouchbeutel eingeführt ist und Luft oder Flüssigkeit in ihn befördert oder aus ihm ableitet. Dadurch ist eine besonders geeignete Ausführung des Entgasungskanals realisiert.

Die Kanüle weist beispielsweise eine runde, insbesondere kreisrunde, Querschnittsform mit einem Durchmesser zwischen 1 mm (Millimeter) und 1 cm (Zentimeter), insbesondere zwischen 1 mm und 5 mm, vorzugsweise zwischen 2 mm und 3 mm, auf. Ebenso denkbar sind beispielsweise ovale oder mehreckige Querschnittsformen, wie beispielsweise dreieckförmig oder rechteckförmig.

Die Kanüle wird vorzugsweise zwischen den Beutelhälften angeordnet, und anschließend mit diesen stoffschlüssig gefügt und umfangsseitig abgedichtet. Vorzugsweise ist die Geometrie oder Querschnittsform der Kanüle hierbei derart ausgeführt, dass die Kanüle einfach heißversiegelt werden kann. Beispielsweise ist die Kanüle mittels eines Dicht- oder Klebemittels, insbesondere einem Schmelzkleber (Hotmelt-Kleber), gegenüber dem Pouchbeutel abgedichtet. Ebenso denkbar ist eine Ummantelung oder Beschichtung der Kanüle aus einem Kunststoffmaterial, welche mit dem Kunststoffmaterial der Pouchfolien gefügt wird.

In einer denkbaren Weiterbildung ist der Entgasungskanal beziehungsweise die Kanüle aus einem entsprechenden Kunststoffmaterial hergestellt. Vorzugsweise ist der Entgasungskanal hierbei stoffschlüssig mit dem Material des Pouchbeutels verbunden. Beispielsweise ist der Entgasungskanal aus dem Kunststoff der Pouchfolie, beispielsweise Polypropylen (PP), hergestellt, so dass im Zuge eines Heißsiegelverfahrens zur Herstellung der umlaufenden Fügeverbindung auch eine direkte oder unmittelbare stoffschlüssige Fügeverbindung zwischen dem Entgasungskanal und den Pouchfolien bewirkt wird. Geeigneterweise ist hierbei während des Heißsiegelprozesses ein (form-)stabiler Kern in den Entgasungskanal eingebracht, so dass dieser beim Heißsiegeln nicht verformt oder verschlossen wird. Der Kern wird nach dem Fügeprozess entfernt.

Erfindungsgemäß wird das Verschließelement bei einem hinreichend hohen Überdruck oder Innendruck des Beutelinnenraums selbsttätig oder automatisch aus dem Entgasungskanal gedrückt oder gepresst. Welcher Überdruck hierbei als hinreichend gilt und wie groß der Überdruck konkret ist, ist dabei zunächst nebensächlich. Dies lässt sich beispielsweise aus vergangenen Fahrzeugbatteriedaten oder aus entsprechenden Versuchen oder Erprobungen ermitteln. Für unterschiedliche Pouchzellen ergeben sich aufgrund von unterschiedlichen Batteriegrößen, Batterieleistung oder chemischer Zusammensetzung des Elektrolytstapels und/oder Flüssigelektrolyts unter Umständen unterschiedliche Überdrücke.

Vorzugsweise wird ist eine stoffschlüssige Verbindung zwischen dem Verschließelement und dem Entgasungskanal realisiert. Zusätzlich oder alternativ kann auch eine kraft- und/oder formschlüssige Verbindung zwischen dem Verschließelement und dem Entgasungskanal vorgesehen sein. Durch die Dimensionierung und Auslegung der Fügeverbindung zwischen dem Verschließelement und dem Entgasungskanal kann ein gewünschter Überdruck definiert werden, ab welchem sich die Fügeverbindung löst, und das Verschließelement aus dem Entgasungskanal gedrückt wird.

Unter einem "Stoffschluss" oder einer "stoffschlüssigen Verbindung" zwischen wenigstens zwei miteinander verbundenen Teilen wird hier und im Folgenden insbesondere verstanden, dass die miteinander verbundenen Teile an Ihren Kontaktflächen durch stoffliche Vereinigung oder Vernetzung (beispielsweise aufgrund von atomaren oder molekularen Bindungskräften) gegebenenfalls unter Wirkung eines Zusatzstoffs zusammengehalten werden.

Unter einem "Formschluss" oder einer "formschlüssigen Verbindung" zwischen wenigstens zwei miteinander verbundenen Teilen wird hier und im Folgenden insbesondere verstanden, dass der Zusammenhalt der miteinander verbundenen Teile zumindest in einer Richtung durch ein unmittelbares Ineinandergreifen von Konturen der Teile selbst oder durch ein mittelbares Ineinandergreifen über ein zusätzliches Verbindungsteil erfolgt. Das "Sperren" einer gegenseitigen Bewegung in dieser Richtung erfolgt also formbedingt.

Unter einem "Kraftschluss" oder einer "kraftschlüssigen Verbindung" zwischen wenigstens zwei miteinander verbundenen Teilen wird hier und im Folgenden insbesondere verstanden, dass die miteinander verbundenen Teile aufgrund einer zwischen ihnen wirkenden Reibkraft gegen ein Abgleiten aneinander gehindert sind. Fehlt eine diese Reibkraft hervorrufende "Verbindungskraft" (dies bedeutet diejenige Kraft, welche die Teile gegeneinanderdrückt, beispielsweise eine Schraubenkraft oder die Gewichtskraft selbst), kann die kraftschlüssige Verbindung nicht aufrechterhalten und somit gelöst werden.

Die Einstellung ab welchem Überdruck der Entgasungskanal geöffnet wird, kann somit durch eine geeignete Wahl der Geometrie und Dimensionierung sowie Material des Entgasungskanals sowie durch Wahl des Materials und der Dimensionierung des Verschließelements erfolgen.

In einer möglichen Anwendung beträgt der Überdruck für ein unkontrolliertes Aufplatzen der Siegelnähte des Pouchbeutels (kritischer Druck, Fehlerdruck) beispielsweise etwa 3 bar. Das Verschließelement ist hierbei derart ausgelegt, dass es bei einem Überdruck zwischen 2 bar und 3 bar, insbesondere zwischen 2 bar und 2,5 bar, aus dem Entgasungskanal herausgedrückt wird. Bei der Auslegung und Dimensionierung der Fügeverbindung beziehungsweise des Überdruckniveaus an welcher der Entgasungskanal öffnet (Öffnungsdruck) ist vorzugsweise stets zumindest ein gewisser Sicherheitsabstand oder Sicherheitsoffset zum kritischen (Fehler-)Druck vorgesehen. Dadurch wird sichergestellt, dass der Pochbeutel lokal geöffnet wird, bevor er unkontrolliert und ungerichtet entgast.

Die erfindungsgemäße Fahrzeugbatterie ist insbesondere als eine Traktionsbatterie eines elektrisch angetriebenen oder antreibbaren Kraftfahrzeugs, beispielsweise eines Elektro- oder Hybridfahrzeugs, ausgeführt. Die Fahrzeugbatterie weist hierbei beispielsweise ein Batteriemodul mit mindestens einer vorstehend beschriebenen Pouchzelle auf. Geeigneterweise weist das Batteriemodul eine Anzahl von erfindungsgemäßen Pouchzellen auf, welche elektrisch miteinander verschaltet sind. Durch die erfindungsgemäßen Pouchzellen wird ein unkontrolliertes Entgasen in alle Raumrichtungen vorteilhaft und einfach vermieden. Dadurch ist eine Beschädigung oder Zerstörung von Komponenten in der Bauraumumgebung der Pouchzellen im Wesentlichen ausgeschlossen. Somit kann auf zusätzliche Packagemaßnahmen von sicherheitsrelevanten Batteriekomponenten verzichtet werden. Die erfindungsgemäße Fahrzeugbatterie ist somit besonders kostengünstig und weist eine besonders hohe Energiedichte auf.

Nachfolgend ist ein Ausführungsbeispiel der Erfindung anhand einer Zeichnung näher erläutert. Darin zeigen in schematischen und vereinfachten Darstellungen:
Fig. 1 in perspektivischer Darstellung eine Pouchzelle,
Fig. 2 in Draufsicht ausschnittsweise die Pouchzelle, und
Fig. 3 in Frontansicht die Pouchzelle.

Einander entsprechende Teile und Größen sind in allen Figuren stets mit den gleichen Bezugszeichen versehen.

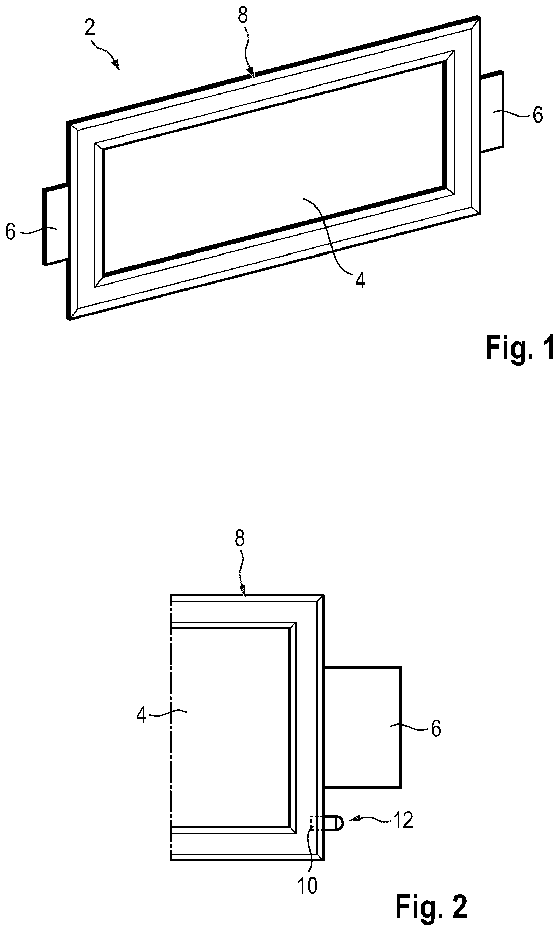

Die Fig. 1 zeigt eine Pouchzelle 2 mit einem etwa rechteckförmigen Pouchbeutel 4, in welchem ein nicht näher dargestellter Elektrodenstapel angeordnet ist. Die Pouchzelle 2 ist beispielsweise Teil einer nicht näher gezeigten Fahrzeugbatterie. Aus dem Pouchbeutel 4 ragen an den gegenüberliegenden Kurz- oder Stirnseiten zwei Anschlusstabs 6 als elektrische Anschlusskontakte zur Kontaktierung und Verschaltung der Pouchzelle 2 beziehungsweise des Elektrodenstapels. Die Anschlusstabs 6 bilden die Kathode und Anode der Pouchzelle 2.

Der Pouchbeutel 4 ist durch zwei umlaufend gefügte Beutelhälften gebildet. Die Beutelhälften sind hierbei als tiefgezogene Pouchfolien ausgeführt, welche beispielsweise als Aluminium-Verbundfolien oder als eine Aluminium-Laminatfolien ausgeführt sind. Die Beutelhälften sind hierbei umlaufend mittels einer als Siegelnaht ausgeführten Fügeverbindung 8 stoffschlüssig fluid- und druckdicht zu dem Pouchbeutel 4 gefügt.

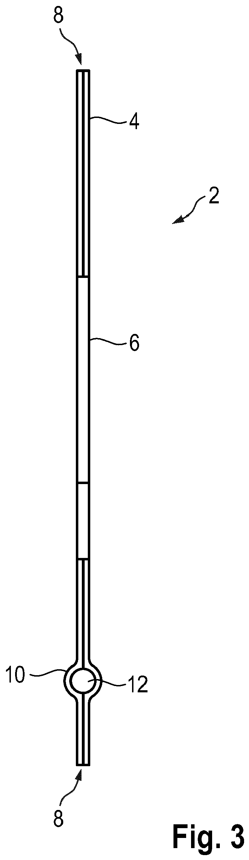

Wie insbesondere in den Darstellungen der Fig. 2 und Fig. 3 ersichtlich ist, ist in den Pouchbeutel 4 ein Entgasungskanal 10 integriert, welcher mittels einer plastischen Masse, insbesondere einer Dicht- oder Klebemasse, als Verschließelement 12 fluid- und druckdicht verschlossen ist. Der Entgasungskanal 10 ist als eine Kanüle ausgeführt, welche an einer der Stirnseiten die Fügeverbindung 8 im Wesentlichen senkrecht durchsetzt, und somit einen Beutelinnenraum des Pouchbeutels 4 mit der Umgebung koppelt.

In dem Pouchbeutel 4 ist beispielsweise ein Flüssigelektrolyt aufgenommen, welcher den Elektrodenstapel durchsetzt. Der Entgasungskanal 10 ist hierbei an derjenigen Stirnseite angeordnet, welche in einer Einbausituation in der Fahrzeugbatterie dem Untergrund abgewandt ist. Mit anderen Worten ist der hierbei etwa vertikal ausgerichtete Entgasungskanal an einer Oberseite oder Oberkante der Pouchzelle 2 angeordnet.

Die Kanüle beziehungsweise der Entgasungskanal 10 weist beispielsweise eine kreisrunde Querschnittsform mit einem Durchmesser zwischen 2 mm bis 3 mm auf. Der Entgasungskanal 10 ist hierbei beispielsweise mittels eines Dicht- oder Klebemittels, insbesondere mittels eines Schmelzklebers, gegenüber dem Pouchbeutel 4 abgedichtet. Ebenso denkbar ist eine Ummantelung oder Beschichtung des Entgasungskanals 6 aus einem Kunststoffmaterial, welche mit dem Kunststoffmaterial der Pouchfolien gefügt wird. Weiterhin ist es denkbar, dass der Entgasungskanal 10 aus einem Kunststoffmaterial gefertigt ist, und unmittelbar stoffschlüssig mit dem Pouchbeutel 4 gefügt wird, wenn die Fügeverbindung 8 erzeugt wird.

Der Entgasungskanal 10 ist im Zuge eines Evakuierungsprozesses des Beutelinnenraums beispielswese offen, und wird nach dem Evakuierungsprozess fluid- und druckdicht mit dem Verschließelement 12 verschlossen. Der Entgasungskanal ist somit derart in den Pouchbeutel 4 beziehungsweise in die Fügeverbindung 8 eingebracht, dass die Pouchzelle 2 nach einer Formierung vakuumiert werden kann.

Ebenso möglich ist, dass der Entgasungskanal 10 auch während der Formierung und Vakuumierung mit dem Verschließelement 12 verschlossen ist. Insbesondere können eine Formierung und Gastasche des Pouchbeutels 4 derart ausgeführt werden, dass der Entgasungskanal 10 lediglich eingesiegelt wird, und der Formierungsdruck deutlich unter dem "Öffnungsdruck" liegt. Somit ist es möglich, alle Prozesse bei der Herstellung herkömmlich auszuführen, wodurch die Herstellungskosten reduziert werden.

Zwischen dem Verschließelement 12 und dem Entgasungskanal 10 ist eine Fügeverbindung, insbesondere eine stoffschlüssige Fügeverbindung, realisiert. Das Verschließelement 12 beziehungsweise die Fügeverbindung ist hierbei derart ausgelegt, dass das Verschließelement 12 bei einem hinreichend hohen Überdruck oder Innendruck des Beutelinnenraums selbsttätig oder automatisch aus dem Entgasungskanal 10 gedrückt oder gepresst, und somit der Entlüftungskanal 10 geöffnet oder freigegeben wird. In einer geeigneten Dimensionierung wird das Verschließelement 12 bei einem Überdruck zwischen 2 bar und 3 bar, insbesondere zwischen 2 bar und 2,5 bar, aus dem Entgasungskanal 10 herausgedrückt.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Pouchzelle
- 4: Pouchbeutel
- 6: Anschlusstab
- 8: Fügeverbindung
- 10: Entgasungskanal
- 12: Verschließelement

## Patentansprüche

1. Pochzelle (2) aufweisend einen Pouchbeutel (4),
- wobei ein den Pouchbeutel (4) durchsetzender Entgasungskanal (10) vorgesehen ist, welcher einen Beutelinnenraum mit einer Umgebung verbindet,
- wobei ein Verschließelement (12) in dem Entgasungskanal (10) einsitzt, und
- wobei das Verschließelement (12) derart ausgelegt ist, dass wenn ein Überdruck in dem Beutelinnenraum auftritt, das Verschließelement (12) durch den Überdruck aus dem Entgasungskanal (10) herausgedrückt wird, und dabei den Entgasungskanal (10) freigibt.

2. Pouchzelle (2) nach Anspruch 1,
**dadurch gekennzeichnet,**
- **dass** der Pouchbeutel (4) mittels einer Fügeverbindung (8) fluiddicht abgedichtet ist, und
- **dass** der Entgasungskanal (10) den Pouchbeutel (4) im Bereich der Fügeverbindung (8) durchsetzt.

3. Pouchzelle (2) nach Anspruch 1 oder 2,
**dadurch gekennzeichnet,**
**dass** das Verschließelement (12) den Entgasungskanal (10) fluiddicht verschließt.

4. Pouchzelle (2) nach einem der Ansprüche 1 bis 3,
**dadurch gekennzeichnet,**
**dass** das Verschließelement (12) als eine plastische Masse in den Entgasungskanal (10) eingebracht ist.

5. Pouchzelle (2) nach einem der Ansprüche 1 bis 4,
**dadurch gekennzeichnet,**
**dass** der Entgasungskanal (10) im Zuge eines Evakuierungsprozesses des Beutelinnenraums offen ist, und nach dem Evakuierungsprozess fluiddicht mit dem Verschließelement (12) verschlossen ist.

6. Pouchzelle (2) nach einem der Ansprüche 1 bis 5,
**dadurch gekennzeichnet,**
**dass** der Entgasungskanal (10) als eine Kanüle ausgeführt ist.

7. Pouchzelle (2) nach einem der Ansprüche 1 bis 6,
**dadurch gekennzeichnet,**
**dass** der Entgasungskanal (10) aus einem Kunststoffmaterial hergestellt ist.

8. Pouchzelle (2) nach einem der Ansprüche 1 bis 7,
**dadurch gekennzeichnet,**
**dass** der Entgasungskanal (10) stoffschlüssig mit dem Material des Pouchbeutels (4) verbunden ist.

9. Pouchzelle (2) nach einem der Ansprüche 1 bis 8,
**dadurch gekennzeichnet,**
**dass** das Verschließelement (12) derart ausgelegt ist, dass es bei einem Überdruck zwischen 2 bar und 3 bar aus dem Entgasungskanal (10) herausgedrückt wird.

10. Fahrzeugbatterie aufweisend mindestens eine Pouchzelle (2) nach einem der Ansprüche 1 bis 9.
